(19)

Europäisches
Patentamt
European
Patent Office
Office européen
des brevets

(11) **EP 2 189 130 A1**

(12) **EUROPEAN PATENT APPLICATION**
published in accordance with Art. 153(4) EPC

(43) Date of publication:
**26.05.2010 Bulletin 2010/21**

(21) Application number: **08791994.0**

(22) Date of filing: **31.07.2008**

(51) Int Cl.:
**A61C 1/08** (2006.01)     **A61C 8/00** (2006.01)

(86) International application number:
**PCT/JP2008/063779**

(87) International publication number:
**WO 2009/034788 (19.03.2009 Gazette 2009/12)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **12.09.2007   JP 2007236978
17.12.2007   JP 2007324976
20.02.2008   JP 2008038627**

(71) Applicant: **Imagnosis Inc.
Kobe-shi
Hyogo 658-0032 (JP)**

(72) Inventor: **KIM, Han-Joon
Kobe-shi
Hyogo 658-0032 (JP)**

(74) Representative: **Witte, Weller & Partner
Phoenixbau
Königstrasse 5
70173 Stuttgart (DE)**

(54) **IMPLANT ERECTING DRILL TOOL, HAND-PIECE, ADAPTER FOR THE HAND-PIECE, AND SURGICAL GUIDE**

(57)     An inventive implant handpiece (12) includes a head (14) having a round outer peripheral surface (20) which is concentric with a center axis of a drill bur (17) and has a predetermined length (H1 to H3) as measured axially of the drill bur (17). A surgical guide (11) has a guide hole (13) having a round inner peripheral surface to be opposed to the round peripheral surface (20) of the head (14). Since a drilling operation is performed with the head (14) fitted in the guide hole (13), the head (14) can be reliably uniquely guided to form an implant implantation hole as desired. Thus, the present invention provides an implant handpiece capable of accurately drilling a hole for formation of an implant implantation hole, and a surgical guide capable of guiding this handpiece.

FIG. 1

EP 2 189 130 A1

## Description

TECHNICAL FIELD

The present invention relates to an implant implantation drilling tool, a handpiece, a handpiece adaptor, and a surgical guide.

BACKGROUND ART

An implant handpiece related to the present invention will be first described.

In general, dental cutting tools are classified into a turbine type adapted to rotate a drill bur at a high speed by compressed air and a handpiece type adapted to rotate a drill bur by an electric motor. The turbine (air turbine) type is mainly used for cutting a tooth. When a hole is drilled into a jawbone for implantation of an implant, on the other hand, it is necessary to rotate a drill at a lower speed with a stable torque for prevention of heat generation. Since it is difficult to adjust the rotation speed of the turbine and supply a stable torque, it is a current practice to use a handpiece of the electric motor type for the implantation.

The implant handpiece related to the present invention is of the electric motor type. In addition, the implant handpiece is configured such that a water supply line can be connected to an upper surface of a head thereof (a water supply hole is provided in the upper surface of the head) with a need for supplying physiological saline or sterilized water as cooling water during drilling.

It is noted that a handpiece attached to a dental chair unit is not configured such that an external water supply line can be connected thereto.

A head of the air turbine has a generally cylindrical outer shape supposedly because the turbine is rotated by air. On the other hand, the implant handpiece is of the electric motor type, and generally has an outer shape tapered toward a distal end of a drill bur because the torque of the motor is transmitted via gears and the like. Further, the handpiece has a smaller head size and, in some cases, the head size is reduced to be equal to the width of a neck of the handpiece.

As will be described below, the head of the prior art implant handpiece is not configured to have a cylindrical outer surface concentric with a drill axis. This is a problem to be solved by the present invention.

In the dental field, an artificial tooth root or a dental implant is often employed for prosthesis at a tooth deficient site. In an implant treatment, it is important to implant the implant at a proper position in a jawbone in order to achieve proper occlusion with respect to a counter tooth and positional and morphological tooth aesthetics and to ensure a safe and stable implanted state. If the implant is implanted at an improper position, it is difficult to achieve proper occlusion between an artificial tooth supported by the implant and the counter tooth. Further, the artificial tooth for the prosthesis is dimensionally, positionally and morphologically unbalanced with respect to adjacent teeth.

For the implantation of the implant, a hole is drilled into the jawbone. Since nerves and blood vessels are present in the jawbone, it is necessary to accurately drill the hole at a position determined through diagnosis. The drilling of the hole is typically achieved by employing a tool called "dental handpiece" and attaching a drill bur to a head disposed at a distal end of the dental handpiece. Indefinite positioning for the drilling, repetition of the drilling, modification of the drilled hole and wobbling during the drilling cause the drilled hole to have a greater size than the implant to be implanted, resulting in loose fitting of the implant in the bone. This makes it impossible to provide sufficient initial fixing, so that the implantation per se will be failed.

Thus, it is important to accurately form the hole in the jawbone at the implantation position determined through the diagnosis, i.e., to accurately perform a drilling operation, for the implantation of the implant.

It is a conventional practice to determine the implant implantation position based on CT imaging data through diagnosis, and perform the drilling operation with the use of an implantation guide (in general, a denture-like base of an acryl resin) formed based on the position and the direction thus determined. More specifically, the guide is firmly fitted over teeth and a jaw ridge in a patient's oral cavity, and the drilling operation is performed with the use of the guide. The guide is formed with a guide hole through which the drill bur is inserted, and a guide mark. The guide hole has a diameter that is much greater than the diameter of the drill bur for prevention of contact with the drill bur rotated at a high speed. The guide mark is typically a groove having a semicircular cross section for simply indicating the drilling position and the drilling angle.

Even if the guide is used when the hole for the implantation of the implant is formed in the patient's jawbone with the use of the prior-art dental drilling tool, the drilling operation is performed substantially on a freehand basis with the use of the dental handpiece. That is, the guide indeed serves as a reference, but fails to accurately guide the drill bur at the position in the direction determined through the diagnosis. (If the drill bur is brought into contact with the guide, the guide is significantly vibrated or broken. Therefore, the guide is not configured such as to be brought into contact with the drill bur.) Therefore, there is a demand for an implant drilling tool for more accurately drilling a hole for the implantation of the implant.

Patent Document 1: Japanese Unexamined Patent Application Publication No. 2001-212158
Patent Document 2: Japanese Unexamined Patent Application Publication No. 2005-518834
Patent Document 3: Japanese Unexamined Patent Application Publication No. 2004-500164

DISCLOSURE OF THE INVENTION

PROBLEMS TO BE SOLVED BY THE INVENTION

In view of the foregoing, it is a principal object of the present invention to provide an implant implantation drilling tool which includes an implant handpiece including a head having a unique shape, and a surgical guide having a guide hole for guiding the head of the implant handpiece.

It is another object of the present invention to provide an implant handpiece including a head having a unique shape or a handpiece adaptor which can be used with an implant implantation surgical guide.

It is further another object of the present invention to provide a surgical guide for the implant handpiece including the head having the unique shape.

MEANS FOR SOLVING THE PROBLEMS

According to an inventive aspect as set forth in claim 1, there is provided an implant implantation drilling tool, which includes: an implant handpiece including a head to which a drill bur is attached, the head having a round outer peripheral surface which is concentric with a center axis of the attached drill bur and has a predetermined length as measured axially of the drill bur; and a surgical guide to be fitted in a patient's oral cavity, the surgical guide having a guide hole for guiding the head of the implant handpiece slidably axially of the drill bur, the guide hole having an arcuate inner peripheral surface to be opposed to the round peripheral surface of the head for guiding the head along the inner peripheral surface axially of the drill bur.

According to an inventive aspect as set forth in claim 2, the implant handpiece has a neck having a distal end provided with the head, and the distal end of the neck is connected to the outer peripheral surface of the head and has a width that is smaller than a diameter of the outer peripheral surface of the head in the implant implantation drilling tool of claim 1.

According to an inventive aspect as set forth in claim 3, the guide hole of the surgical guide has an opening through which the distal end of the neck is insertable, and the opening has an opening angle less than 180 degrees about a center of the guide hole in the implant implantation drilling tool of claim 2.

According to an inventive aspect as set forth in claim 4, one of the outer peripheral surface of the head and the inner peripheral surface of the guide hole has a water flow channel through which cooling water flows back in the implant implantation drilling tool of any of claims 1 to 3.

According to an inventive aspect as set forth in claim 5, there is provided an implant handpiece, which includes a head to which a drill bur is attached, the head having a round outer peripheral surface which is concentric with a center axis of the attached drill bur and has a length not less than a predetermined length as measured axially of the drill bur.

According to an inventive aspect as set forth in claim 6, there is provided an implant implantation surgical guide to be used for implantation of an implant, the surgical guide having a guide hole for guiding a head of an implant handpiece to which a drill bur is attached, the guide hole having an arcuate inner peripheral surface for sliding the head of the implant handpiece axially of the drill bur, the guide hole being configured such that an outer peripheral surface of the head is slid along the inner peripheral surface.

According to an inventive aspect as set forth in claim 7, there is provided an implant implantation surgical guide to be used for implantation of an implant, the surgical guide including a guide body to be fitted in a patient's oral cavity and having an attachment hole formed therein, and a guide hole formation member including a hollow cylindrical body fitted in the attachment hole with its outer surface connected to an inner surface of the attachment hole for sliding an outer surface of a head of a handpiece along an inner surface of the guide hole formation member, the hollow cylindrical body having a cutaway portion or a removable portion extending axially thereof in an angular range less than 180 degrees for passage of a neck of the handpiece.

According to an inventive aspect as set forth in claim 8, there is provided a guide hole formation member to be fitted in the attachment hole of the guide body of the surgical guide of claim 7, the guide hole formation member including a hollow cylindrical body which has an arcuate inner peripheral surface having an angular range not less than 180 degrees and standardized as conforming to an outer surface of the head of the handpiece, the hollow cylindrical body having a cutaway portion extending axially thereof in an angular range less than 180 degrees to permit the passage of the neck of the handpiece when the head of the handpiece is slid along the inner peripheral surface, and a removable band portion which bridges the cutaway portion and permits the passage of the neck of the handpiece after being removed.

According to an inventive aspect as set forth in claim 9, the guide hole formation member of claim 8 is composed of a resin, a metal or a combination of the resin and the metal.

According to an inventive aspect as set forth in claim 10, the guide hole formation member of claim 8 or 9 further includes a multiplicity of small balls rotatably embedded in the inner peripheral surface as slightly projecting from the inner peripheral surface, and arranged to be rotated in contact with the outer surface of the head when the head of the handpiece is slid along the inner peripheral surface.

According to an inventive aspect as set forth in claim 11, there is provided an implant handpiece adaptor to be attached to a head of an implant handpiece, the adaptor having an arcuate outer peripheral surface which is concentric with a drill bur attached to the head when being fitted around the head.

According to an inventive aspect as set forth in claim 12, the implant handpiece adaptor of claim 11 includes a multiplicity of small balls rotatably embedded in the peripheral surface of the adaptor as slightly projecting from the peripheral surface.

According to an inventive aspect as set forth in claim 13, there is provided an implant implantation drilling tool, which includes: an implant handpiece including a head to which a drill bur is attached, the head having a regular polygonal outer peripheral surface which is concentric with a center axis of the attached drill bur and has a predetermined length as measured axially of the drill bur; and a surgical guide to be fitted in a patient's oral cavity, the surgical guide having a guide hole for guiding the head of the implant handpiece slidably axially of the drill bur, the guide hole having a regular polygonal inner peripheral surface to be opposed to the regular polygonal peripheral surface of the head for guiding the head along the inner peripheral surface axially of the drill bur.

According to an inventive aspect as set forth in claim 14, there is provided an implant implantation drilling tool, which includes: an implant handpiece including a head to which a drill bur is attached, the head having a round outer peripheral surface which is concentric with a center axis of the attached drill bur and has a predetermined length as measured axially of the drill bur, the head including an engagement projection projecting outward from the round peripheral surface about the center axis; and a surgical guide to be fitted in a patient's oral cavity, the surgical guide having a guide hole for guiding the head of the implant handpiece slidably axially of the drill bur, the guide hole having an arcuate inner peripheral surface to be opposed to the round peripheral surface of the head for guiding the head along the inner peripheral surface axially of the drill bur, the surgical guide including a plurality of engagement grooves formed in the inner peripheral surface as extending axially of the drill bur for engagement with the engagement projection.

EFFECTS OF THE INVENTION

According to the inventive aspect of claim 1, the head of the implant handpiece has the round outer peripheral surface concentric with the center axis of the drill bur and having a length greater than the predetermined length as measured axially of the drill bur. Therefore, the drill bur can be slid at a desired angle in a desired direction based on the round peripheral surface of the head by moving the implant handpiece axially of the drill bur along the round peripheral surface of the head. This makes it possible to accurately drill a hole at the desired angle in the desired direction by means of the drill bur.

The guide hole of the surgical guide for guiding the implant handpiece is not adapted to guide the drill bur as in the prior art, but adapted to guide the head of the implant handpiece. The guiding of the head is a novel idea. For guiding the head but not the drill bur, the guide hole has the arcuate inner peripheral surface to be opposed to the round peripheral surface of the head. Therefore, a drilling operation can be accurately performed by moving the round peripheral surface of the head along the inner peripheral surface axially of the drill bur.

Thus, the inventive implant implantation drilling tool is based on a novel idea of guiding the head of the implant handpiece through the hole of the surgical guide. Therefore, the head of the implant handpiece has a unique outer shape as described in claim 1. Further, the guide hole of the surgical guide is configured so as to guide the head of the unique shape.

According to the inventive aspect of claim 2, the neck connected to the head of the implant handpiece is smaller in size than the head. Since the distal end of the neck is smaller in size than the head, the head can be rotated in a desired direction within the guide hole of the surgical guide.

Particularly, where the guide hole of the surgical guide has the opening having an opening angle less than 180 degrees as described in claim 3, the distal end of the neck can pass through the opening, and the head is rotatable about the axis thereof and axially slidable without offset from the inner peripheral surface.

Where an implant implantation hole is drilled into a patient's jawbone by means of the drill bur, it is a common practice to perform the drilling operation while supplying cooling water in order to prevent the jawbone from being adversely affected by frictional heat generated during the drilling operation. Since the water flow channel through which the cooling water flows back is provided in one of the outer peripheral surface of the head and the inner peripheral surface of the guide hole according to the inventive aspect of claim 4, it is possible to ensure proper flow of the cooling water (supply of the cooling water and drain of the supplied cooling water) while properly guiding the head of the implant handpiece through the hole of the surgical guide.

According to the inventive aspect of claim 5, the implant handpiece of a novel shape described in claim 1 is provided for the implantation of the implant.

According to the inventive aspect of claim 6, the implant implantation surgical guide is provided, which is suitable as a guide for the implant handpiece of the novel shape described in claim 5.

According to the inventive aspect of claim 7, the guide hole of the implant implantation surgical guide for guiding the head of the handpiece is defined by a dedicated guide hole formation member. The guide hole defined by the guide hole formation member has an arcuate inner surface, along which the outer surface of the head of the handpiece is slid. The hollow cylindrical body has the cutaway portion or the removable portion axially extending in an angular range less than 180 degrees for the passage of the neck of the handpiece. Therefore, the head of the handpiece can be properly slid along the inner surface of the guide hole formation member without interference with the neck of the handpiece during use.

Where at least the inner peripheral surface of the guide hole formation member is composed of a fluororesin, the frictional resistance is reduced and, therefore, the head of the handpiece can be smoothly guided. It is preferred to use TEFLON (registered trade mark) as the fluororesin.

According to the inventive aspect of claim 8, the guide hole formation member to be fitted in the attachment hole of the guide body of the surgical guide of claim 7 is provided as a component having a unique configuration. The guide hole formation member of claim 8 has the removable band portion which bridges the cutaway portion axially extending in an angular range less than 180 degrees and permits the passage of the neck of the handpiece. Therefore, the removable band portion prevents the hollow cylindrical body of the guide hole formation member from being deformed when the guide hole formation member is in a stand-alone state. Thus, the guide hole formation member can maintain the dimensional accuracy of the inner diameter thereof. After the guide hole formation member is fitted in the attachment hole of the guide body, the removable band portion is removed, whereby the cutaway portion can be easily provided for the passage of the neck of the handpiece.

According to the inventive aspect of claim 9, the guide hole formation member is composed of the resin, the metal, or the combination of the resin and the metal. Therefore, the guide hole formation member can be produced as having a required strength, and a required friction coefficient on the inner peripheral surface. Examples of the resin include an acryl resin and a fluororesin, and an example of the metal is aluminum.

According to the inventive aspect of claim 10, the small balls are arranged in the inner peripheral surface of the guide hole formation member. Therefore, when the head of the handpiece is inserted along the inner peripheral surface of the guide hole formation member, the outer surface of the head is brought into contact with the small balls, and guided by the rotation of the small balls. Thus, the head of the handpiece can be smoothly slid with lower frictional resistance.

According to the inventive aspect of claim 11, the adaptor is fitted around the head of the implant handpiece to impart the head of the handpiece with a shape such that the head of the handpiece can be guided by the inventive surgical guide. Even if a conventional implant handpiece is used, the drilling operation can be accurately performed with the use of the inventive surgical guide.

According to the inventive aspect of claim 12, the small balls are rotatably embedded in the round peripheral surface of the adaptor. Since the small balls are brought into contact with the inner peripheral surface of the guide hole of the surgical guide, the head of the handpiece can be smoothly slid in the guide hole with lower friction resistance.

According to the inventive aspect of claim 13 or 14, the head of the implant handpiece inserted in the guide hole of the surgical guide is slidable along the inner peripheral surface of the guide hole axially of the drill bur. Therefore, the implant hole can be accurately formed without offset of the drill bur in a direction crossing the axis of the drill bur.

Even if the guide hole of the surgical guide has the opening through which the distal end of the neck of the implant handpiece is insertable, play present in the guide hole due to the opening can be reduced. Therefore, the implant implantation drilling tool is substantially free from the wobbling and the rattling of the head when the head is slid through the guide hole.

Although there is little play in the guide hole, as described above, the head inserted in the guide hole cannot be turned in the guide hole. However, it is possible to once remove the head from the guide hole, then turn the head, and reinsert the head into the guide hole to accurately form the intended implant implantation hole by means of the drill bur.

According to the inventive aspect of claim 13, preferred examples of the regular polygonal shape include a regular triangular shape to a regular dodecagonal shape.

In the arrangement according to the inventive aspect of claim 14, the engagement projection preferably includes two engagement projections projecting outward from the round peripheral surface symmetrically about the center axis and each extending axially. On the other hand, the engagement grooves to be engaged with the engagement projections are preferably a plurality of grooves (4 to 16 grooves) equidistantly arranged in the inner peripheral surface and each extending axially.

According to the inventive aspect of claim 13, the head of the implant handpiece per se has a regular polygonal peripheral surface, but an adaptor having a regular polygonal peripheral surface may be attached to the head of the implant handpiece.

The guide hole of the surgical guide may be provided by preliminarily forming a cylindrical hole in the surgical guide, and attaching a guide hole formation member having a regular polygonal inner peripheral surface to an inner peripheral surface of the cylindrical hole.

In the arrangement according to the inventive aspect of claim 14, the adaptor having the engagement projection may be attached to the head of the implant handpiece as in the arrangement according to the inventive aspect of claim 13. Further, the guide hole of the surgical guide may be provided by forming a cylindrical hole in the surgical guide, and fitting a guide hole formation member in the cylindrical hole, rather than by forming the guide hole having the engagement grooves in the surgical guide per se.

BRIEF DESCRIPTION OF THE DRAWINGS

Fig. 1 is a schematic diagram showing how to drill an implant implantation hole in a patient's jawbone with the use of an implant implantation drilling tool according to a first embodiment of the present invention.

Fig. 2 is a schematic diagram showing how to drill an implant implantation hole in a patient's jawbone with the use of a dental handpiece and a surgical guide according to the prior art.

Figs. 3(A1), 3(B1), 3(A2), 3(B2), 3(A3) and 3(B3) are diagrams showing the shapes of heads 14 of exemplary implant handpieces according to embodiments of the present invention.

Figs. 4(A), 4(B) and 4(C) are schematic diagrams showing how to guide the heads 14 of the implant handpieces 12 through a guide hole 13 formed in a surgical guide 11.

Fig. 5 is a diagram for explaining a relationship between the guide hole 13 formed in the surgical guide 11 and the head 14 and a neck 15 of the implant handpiece 12 as seen in plan.

Fig. 6 is a schematic diagram for explaining an operation to be performed for forming an implant implantation hole in a patient's oral cavity.

Fig. 7 is a diagram illustrating a modification of the surgical guide 11.

Fig. 8 is a perspective view illustrating a modification of the head 14 of the implant handpiece 12.

Fig. 9 is a partial perspective view for explaining the construction of a surgical guide 41 according to another embodiment of the present invention.

Fig. 10 is a partial perspective view for explaining the construction of a surgical guide 51 according to further another embodiment of the present invention.

Fig. 11 is a perspective view for explaining the structure of a guide hole formation member 43b according to still another embodiment of the present invention.

Fig. 12 is a perspective view for explaining the structure of a handpiece adaptor 62 according to further another embodiment of the present invention.

Fig. 13 is a perspective view for explaining the structure of a handpiece adaptor 66 according to still another embodiment of the present invention.

Fig. 14 is a perspective view for explaining the structure of a handpiece adaptor 70 according to further another embodiment of the present invention.

Fig. 15 is a perspective view for explaining the structures of an implant handpiece and a surgical guide according to still another embodiment of the present invention.

Figs. 16(1) and 16(2) are perspective views for explaining the structures of implant handpieces and a surgical guide according to further embodiments of the present invention.

DESCRIPTION OF REFERENCE CHARACTERS

11, 41, 51: Surgical guides
12: Implant handpiece
13: Guide hole
14: Head
15: Neck
16: Opening
17: Drill bur
20: Round peripheral surface
31, 32: Water flow channels
42: Guide body
43, 43a, 43b: Guide hole formation members
46: Inner peripheral surface
62, 66: Adaptors
67: Small balls

BEST MODE FOR CARRYING OUT THE INVENTION

Embodiments of the present invention will hereinafter be described more specifically with reference to the attached drawings.

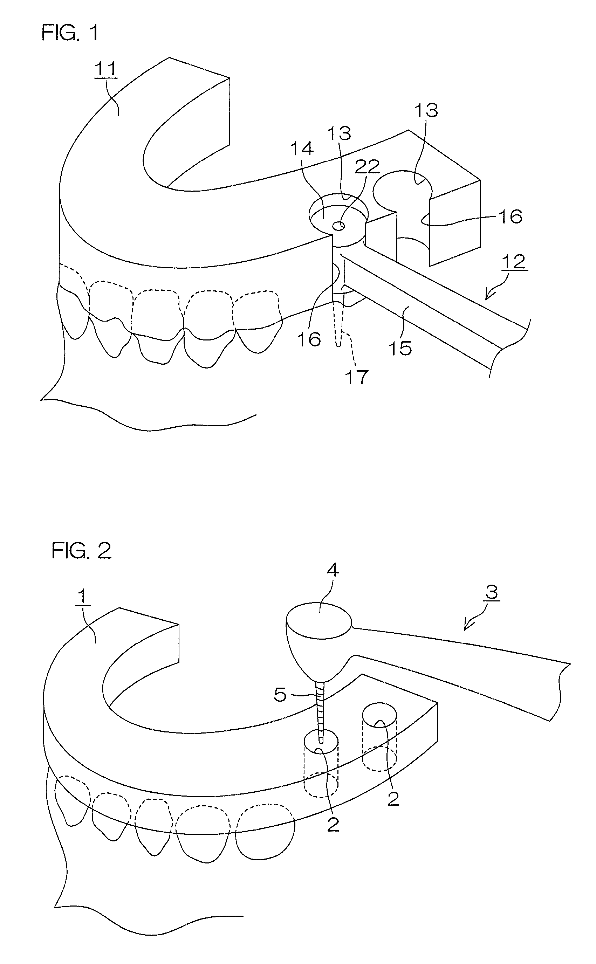

Fig. 1 is a schematic diagram showing how to drill an implant implantation hole in a patient's jawbone with the use of an implant implantation drilling tool according to one embodiment of the present invention. Fig. 2 is a schematic diagram showing how to drill an implant implantation hole in a patient's jawbone with the use of a dental handpiece and a surgical guide according to the prior art.

First, a method of forming the implant implantation hole according to the prior art will be described with reference to Fig. 2.

The conventionally used surgical guide 1 has a guide hole 2 for guiding a drill bur 5. With the surgical guide 1 fitted in the patient's oral cavity, the guide hole 2 formed in the surgical guide 1 defines a position and an angle for guiding the drill bur 5 when a drilling operation is performed at an implant implantation position. A dentist holds and operates the dental handpiece 3 to move the handpiece 3 downward along the guide hole 2 while rotating the drill bur 5 attached to the head 4 of the handpiece 3. Thus, the implant implantation hole is drilled into the patient's jawbone. At this time, the guide hole 2 serves as a hole for guiding the drill bur 5. If the rotating drill bur 5 is brought into contact with an inner peripheral surface of the guide hole 2 and the like, an impact is applied to the surgical guide 1, thereby sometimes cracking a portion of the surgical guide 1 around the guide hole 2. Therefore, the diameter (inner diameter) of the guide hole 2 is significantly greater than the diameter (outer diameter) of the drill bur 5 for preventing the drill bur 5 from contacting the inner peripheral surface of the guide hole 2 and the like when the drill bur 5 is inserted into the guide hole 2. The dentist visually adjusts the drill bur insertion direction and position, and carefully inserts the drill bur 5 into the center of the guide hole 2 to form the implant implantation hole. The head 4 of the prior-art dental handpiece 3 is typically tapered downward for easy visual detection of the drill bur 5.

On the other hand, the implant implantation drilling tool according to the embodiment of the present invention, as shown in Fig. 1, includes a surgical guide 11 to be fitted in the patient's oral cavity, and an implant handpiece 12. The surgical guide 11 has a guide hole 13 for defining a hole position and a hole angle when an implant implantation hole is drilled. One feature of this embodiment is that the guide hole 13 is adapted to guide a head 14 of the implant handpiece 12 rather than to guide the drill bur as in the prior art. Therefore, the guide hole 13 is a cylindrical hole having a diameter (inner diameter) such that an outer peripheral surface of the head 14 can be guided in contact with an inner peripheral surface of the guide hole 13. Further, the guide hole 13 has an opening 16 for receiving a neck 15 of the implant handpiece 12.

With the use of the surgical guide 11 and the implant handpiece 12 according to this embodiment, the dentist performs the drilling operation by holding the implant handpiece 12, fitting the head 14 in the guide hole 13 and sliding the head 14 downward through the guide hole 13. Thus, the implant implantation hole is drilled in a predetermined direction at a predetermined position in the patient's jawbone by the drill bur 17 projecting from a lower surface of the head 14. Unlike the drill bur 17, the head 14 is not rotated. Therefore, the head 14 can be smoothly moved downward along the inner peripheral surface of the guide hole 13 while being fitted in the guide hole 13. With a gap less than a permissible level between the inner peripheral surface of the guide hole 13 and the outer peripheral surface of the head 14, the head 14 can be slid at a position in a direction uniquely defined by the guide hole 13, whereby the hole can be reliably drilled at a position preliminarily determined through diagnosis by the drill bur 17.

Since the head 14 is connected to a distal end of the neck 15, an opening is required through which the neck 15 passes when the head 14 is moved downward. Therefore, the guide hole 13 has an opening 16, and the neck 15 passes through the opening 16. Thus, the surgical guide does not interfere with the head 14 when the head 14 is moved downward through the guide hole 13.

In this embodiment, as described above, the guide hole 13 formed in the surgical guide 11 does not serve for the drill bur 17 but serves for the head 14. As will be described later, the head 14 has a shape such that the head 14 can be uniquely moved through the guide hole 13. Thus, the implant hole can be accurately drilled by operating the implant handpiece 12 based on the surgical guide 11 without the need for visually adjusting the drilling position as in the prior art.

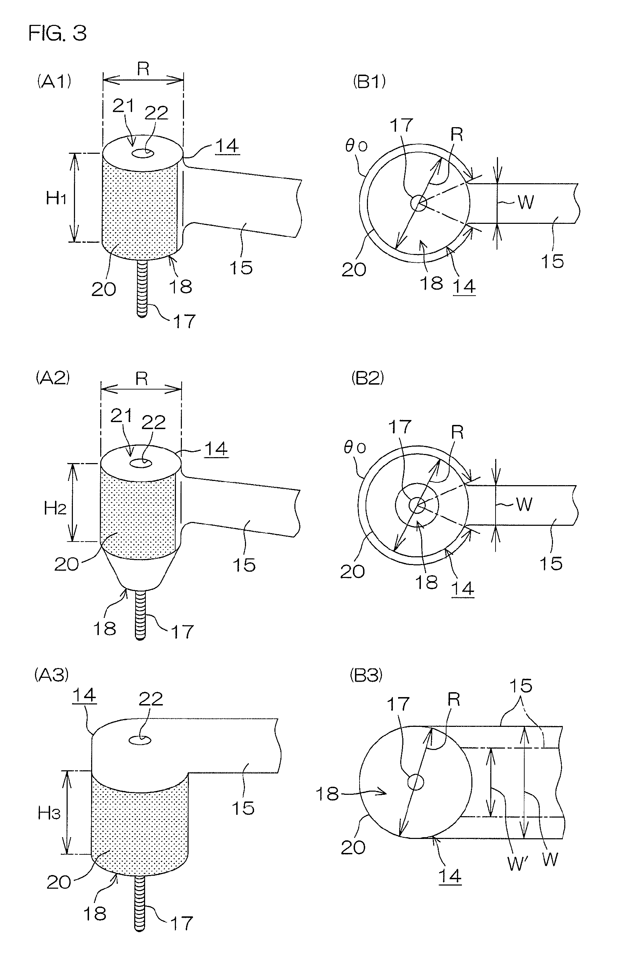

Figs. 3(A1), 3(B1), 3(A2), 3(B2), 3(A3) and 3 (B3) are diagrams showing the shapes of heads 14 of exemplary implant handpieces according to embodiments of the present invention.

Figs. 3(A1) and 3(B1) are a perspective view and a bottom view, respectively, of an exemplary head 14. As shown in Figs. 3(A1) and 3(B1), the head 14 is a cylindrical head. More specifically, the head 14 is configured such that the drill bur 17 can be attached to the center of a lower end face 18 of the head 14. The head 14 has a round outer peripheral surface 20 concentric with the center axis of the attached drill bur 17 and having a predetermined length H1 as measured axially of the drill bur 17. An upper end face 21 of the head 14 is completely round and has a diameter R. The lower end face 18 of the head 14 is also completely round and has a diameter R. The round peripheral surface 20 connects peripheral edges of the upper end face 21 and the lower end face 18, and has a diameter R and a length H1 as described above.

The head 14 has a water supply hole 22 provided at the center of the upper end face 21 thereof for supplying water or physiological saline as cooling water to the drill bur 17 during the drilling operation.

A neck 15 is connected to the head 14. The width W of a distal end of the neck 15 connected to the head 14 (the size W of the distal end of the neck 15 as seen horizontally in Fig. 3(B1)) is W < R (wherein R is the diameter of the head 14).

As a result, the round peripheral surface 20 of the head 14 has an angular range $\theta 0$ ($\theta 0$ > 180 degrees), and a length H1. The round peripheral surface 20 may be colored or marked so that the dentist can easily detect the round peripheral surface 20 when operating the implant handpiece.

Figs. 3(A2) and 3(B2) are a perspective view and a bottom view, respectively, of another exemplary head 14.

The head 14 shown in Figs. 3(A2) and 3(B2) has a feature such that the diameter of an outer peripheral surface portion adjacent to a lower end face 18 is progressively reduced toward the lower end face. The head 14 has a round peripheral surface 20 having a length H2. The other structural portions are the same as those of the head 14 shown in Figs. 3(A1) and 3(B1). Therefore, like components are denoted by like reference characters, and duplicate description is omitted.

Figs. 3(A3) and 3(B3) are a perspective view and a bottom view, respectively, of further another exemplary head 14. The head 14 shown in Figs. 3(A3) and 3 (B3) has a feature such that a neck 15 is connected to an upper end face of the head 14 unlike the heads shown in Figs. 3(A1), 3(B1), 3(A2) and 3(B2). Thus, the head 14 has a round peripheral surface 20 having a length H3 as measured upward from a peripheral edge of a lower end face 18 thereof.

With the arrangement of Figs. 3(A3) and 3(B3), the width of the neck 15 may be smaller than the diameter R of the round peripheral surface 20 (as indicated by W'), equal to the diameter R (as indicated by W), or greater than the diameter R.

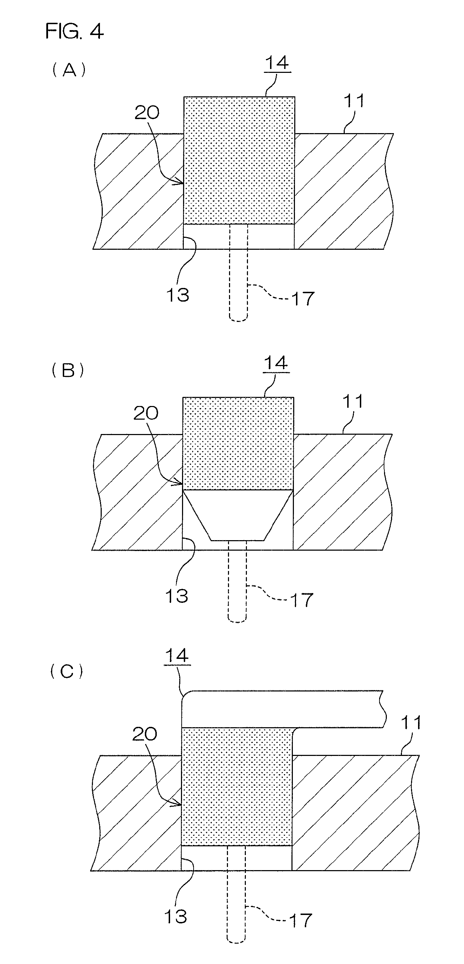

Figs. 4(A), 4(B) and 4(C) are schematic sectional views showing how to guide the heads 14 of the implant handpieces 12 through the guide hole 13 formed in the surgical guide 11. The guide hole 13 formed in the surgical guide 11 is a cylindrical hole. Where the head 14 shown in Figs. 3(A1) and 3(B1) is fitted in the guide hole 13, for example, the round peripheral surface 20 of the head 14 is engaged with the inner peripheral surface of the guide hole 13 in opposed relation as shown in Fig. 4(A). Therefore, the head 14 is guided through the guide hole 13 to be thereby vertical slid without deviation of its movement direction. Thus, a hole can be drilled at a predetermined position in a predetermined direction by means of the drill bur 17 attached to the lower end face 18 of the head 14.

The head 14 having a shape shown in Figs. 3 (A2) and 3(B2) is fitted in the guide hole 13 of the surgical guide 11 in a state as shown in Fig. 4(B). The head 14 includes a lower portion having a diameter that is progressively reduced downward, and the round peripheral surface 20 having a length H2. With the round peripheral surface 20 in engagement with the guide hole 13, the head 14 can be slid vertically through the guide hole 13 without deviation of the drilling direction of the drill bur 17.

The head 14 shown in Figs. 3(A3) and 3(B3) is fitted in the guide hole 13 of the surgical guide 11 as shown in Fig. 4(C). The fitting of the head 14 is achieved in substantially the same manner as shown in Fig. 4(A). However, when the head 14 is inserted into the guide hole 13, the insertion depth can be restricted by the neck 15 because the neck 15 extends from the upper end face of the head 14.

In any case, the head 14 has the round peripheral surface 20 having the predetermined length H1 to H3 as measured vertically, so that the head 14 can be slid vertically through the guide hole 13 with its round peripheral surface 20 opposed to the inner peripheral surface of the guide hole 13 without the wobbling and offset of the head 14.

A relationship between the diameter (outer diameter) R of the round peripheral surface 20 of the head 14 and the inner diameter R1 of the guide hole 13 is as follows:

$$R1 = R + \alpha$$

wherein $\alpha$ is a minute margin required for the head 14 to be slid through the guide hole 13.

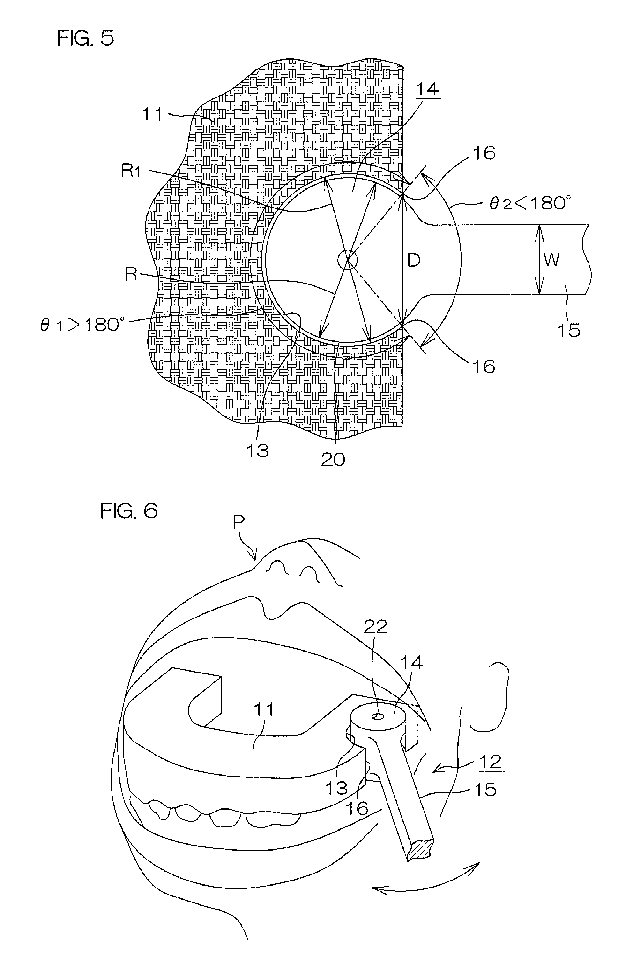

Fig. 5 is a diagram for explaining a relationship between the guide hole 13 formed in the surgical guide 11 and the head 14 and the neck 15 of the implant handpiece 12 as seen in plan. Referring to Fig. 5, the guide hole 13 has the opening 16. The guide hole 13 is a completely round hole having a diameter (inner diameter) R1 as seen in plan, and the opening 16 is defined by a part of the guide hole 13 as extending axially. The guide hole 13 has an arcuate inner peripheral surface extending axially thereof in an angular range $\theta1$. Here, the angular range $\theta1$ is $\theta1 > 180$ degrees. In other words, the opening angle $\theta2$ of the opening 16 is $\theta2 < 180$ degrees. As a result, the width D of the opening 16 is smaller than the diameter R1 of the guide hole 13, thereby preventing the head 14 inserted in the guide hole 13 from being disengaged or withdrawn through the opening 16.

On the other hand, the width W of the neck 15 is smaller than the diameter R of the head 14. Therefore, the opening 16 is present on opposite sides of the neck 15, so that the neck 15 can be pivoted about the head 14 within the opening 16.

With this arrangement, where the head 14 is fitted in the guide hole 13 of the surgical guide 11 in the oral cavity of a patient P as shown in Fig. 6, the neck 15 can be pivoted in a desired direction. Therefore, the operability of the implant handpiece 12 is advantageously improved.

As shown in Fig. 5, the round peripheral surface 20 of the head 14 is kept in contact with the inner peripheral surface of the guide hole 13 in an angular range greater than 180 degrees without the possibility that the head 14 is disengaged from the guide hole 13 through the opening 16, thereby preventing the rattling and the wobbling of the head 14 in the guide hole 13. In other words, where the head 14 is fitted in the guide hole 13, the head 14 is embraced by the inner peripheral surface of the guide hole 13 and is slidable along the inner peripheral surface of the guide hole 13.

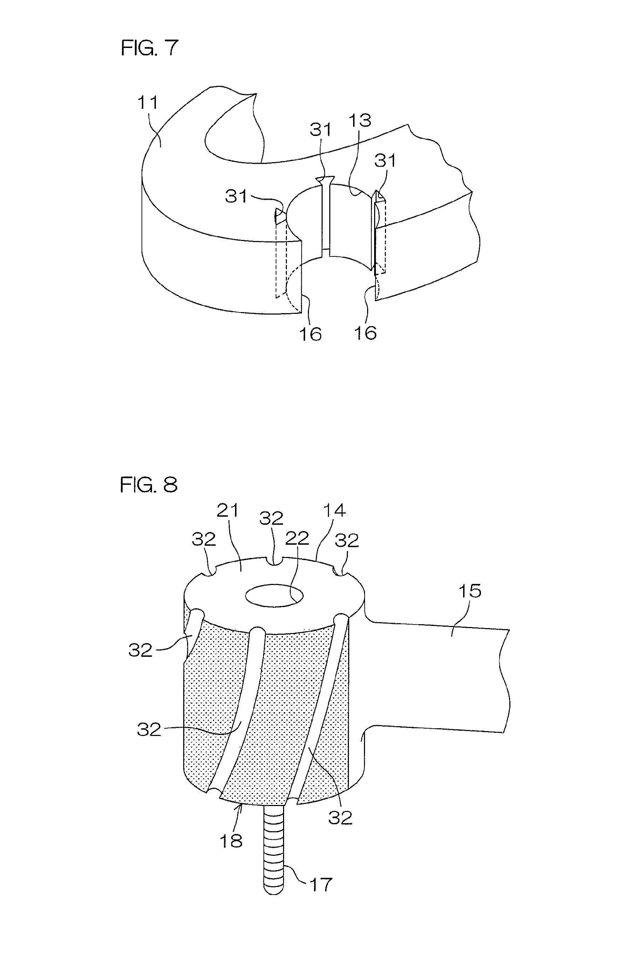

Fig. 7 is a diagram illustrating a modification of the surgical guide 11, in which water flow channels 31 are provided in the guide hole 13.

When a hole is formed in the patient's jawbone by means of the drill bur 17 with the use of the implant handpiece 12, frictional heat is liable to be generated between the drill bur 17 and the jawbone due to the rotation of the drill bur 17. Since the heat is liable to adversely affect the tissue of the jawbone, the cooling water is generally supplied for removal of the frictional heat. The cooling water flows from a water supply hole 22 formed at the center of the upper end face 21 of the head 14 through a water channel provided within the head 14 to be supplied to the periphery of the drill bur 17 from the lower end face 18. Physiological saline is preferably used as the cooling water. As shown in Fig. 7, the guide hole 13 has water flow channels 31 through which the cooling water flows back to be drained. With the provision of the water flow channels 31, an excess amount of the cooling water (the cooling water flowing back after being used for the cooling) is drained from the upper side of the surgical guide 11. Thus, the head 14 can be smoothly slid downward through the guide hole 13 without receiving the resistance of the cooling water during the drilling operation.

The water flow channels 31 also serve to prevent the surgical guide 11 per se from being lifted from an attachment position by the cooling water supplied and retained in the patient's oral cavity.

The water flow channels 31 are provided at predetermined intervals in the inner peripheral surface of the cylindrical guide hole 13 as extending axially of the guide hole 13. Therefore, the water flow channels are unlikely to hinder the guiding of the head 14 along the inner peripheral surface of the guide hole 13 and to wobble the guided head 14.

Fig. 8 is a perspective view illustrating a modification of the head 14 of the implant handpiece 12. The head 14 shown in Fig. 8 has water flow channels 32 formed in the round peripheral surface 20 thereof. When the drill bur 17 is rotated by the head 14, the cooling water is supplied from the water supply hole 22 as described above. The water flow channels for draining the cooling water are not provided in the inner peripheral surface of the guide hole 13 as shown in Fig. 7, but are formed in the round peripheral surface 20 of the head 14. In this case, the water flow channels 32 are provided at predetermined intervals in the round peripheral surface 20 as extending vertically. When the round peripheral surface 20 is fitted in the guide hole 13, the presence of the water flow channels 32 does not cause the rattling and the wobbling of the head 14 in the guide hole 13.

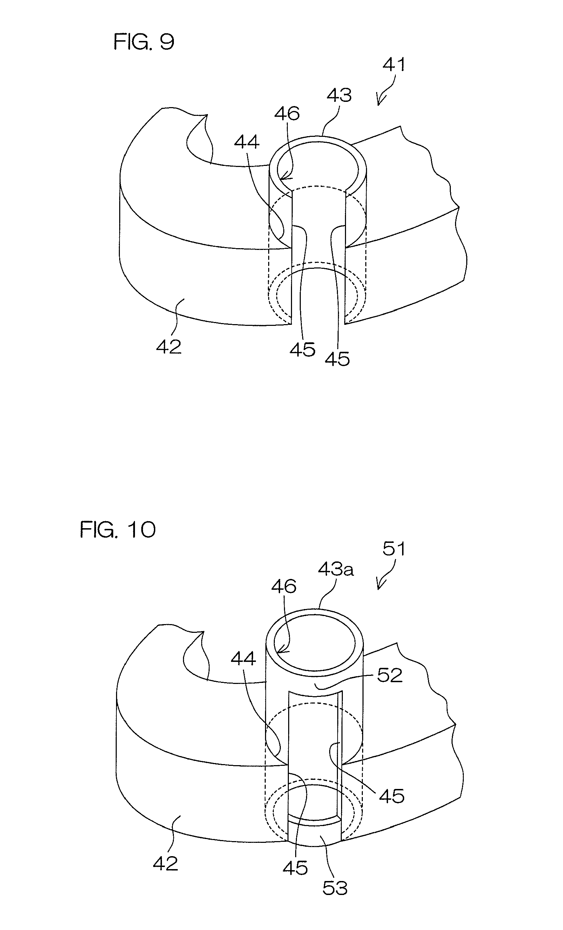

Fig. 9 is a partial perspective view showing the construction of a surgical guide 41 according to another embodiment of the present invention. The surgical guide 41 includes a guide body 42 composed of, for example, an acryl resin, and a guide hole formation member 43 composed of a resin, such as a fluororesin, more specifically TEFLON (registered trade mark), having lower frictional resistance. Like the surgical guide 11 described with reference to Fig. 1, the guide body 42 is a denture-like base having indentations provided on a lower surface thereof as conforming to teeth in the patient's oral cavity so as to be fitted in a predetermined position in the patient's oral cavity. The guide body 42 has an attachment hole 44 provided in association with an implant implantation position. In Fig. 9, the guide body 42 is illustrated as having a single attachment hole 44 for simplicity of illustration, but two or more attachment holes 44 may be provided as required.

The guide hole formation member 43 is fitted in the attachment hole 44. The guide hole formation member 43 has a cutaway portion 45, which is formed by partly axially cutting a hollow cylindrical body. The cutaway portion 45 defines an opening through which the distal end of the neck of the implant handpiece can pass. The guide hole formation member 43 has an arcuate inner peripheral surface 46 extending axially thereof, so that the outer surface of the head of the handpiece can be slidably guided. The inner peripheral surface 46 is completely round as seen in plan.

For assembling, the guide hole formation member 43 is inserted into the attachment hole 44 of the guide body 42 to be fitted in position, and the outer surface of the guide hole formation member 43 and the inner surface of the attachment hole 44 are bonded to each other, whereby the guide hole formation member 43 is fixed to the guide body 42.

For firmer adhesion of the guide hole formation member 43 in the attachment hole 44, the inner surface of the attachment hole 44 and/or the outer surface of the guide hole formation member 43 may be formed with projections and recesses for engagement therebetween.

In Fig. 9, the height (vertical length) of the guide hole formation member 43 is greater than the height (vertical length) of the guide body 42. A lower end face of the guide hole formation member 43 is flush with a lower surface of the guide body 42, while an upper portion of the guide hole formation member 43 projects from an upper surface of the guide body 42. Therefore, even if the height (vertical length) of the guide body 42 is smaller, the guide hole formation member 43 can guide the head of the handpiece because the inner peripheral surface 46 of the guide hole formation member 43 extends vertically as having a greater length.

Of course, the vertical length of the guide hole formation member 43 may be equal to the vertical length of the guide body 42. That is, the upper portion of the guide hole formation member 43 is not necessarily required to project above the upper surface of the guide body 42.

Fig. 10 is a partial perspective view for explaining the principal structure of a surgical guide 51 according to further another embodiment of the present invention. The surgical guide 51 shown in Fig. 10 differs from the surgical guide 41 described with reference to Fig. 9 in the structure of the guide hole formation member 43a. The guide hole formation member 43a of the surgical guide 51 also has a cutaway portion 45 formed by partly axially cutting a hollow cylindrical body, but further has connection portions 52, 53 provided at its upper and lower edges. Therefore, upper and lower edge portions of the guide hole formation member 43a are cylindrical.

Where the guide hole formation member 43a has a shape shown in Fig. 10, the cutaway portion 45 of the guide hole formation member 43a is unlikely to be expended, i.e., the guide hole formation member 43a is less liable to be deformed before the fitting thereof. Therefore, the inner peripheral surface 46 of the guide hole formation member 43a is advantageously maintained in a completely round shape as seen in plan. Further, this arrangement is also advantageous in that the guide hole formation member 43a can be easily fitted in the attachment hole 44 of the guide body 42.

The upper connection portion 52 and, as required, the lower connection portion 53, of the surgical guide 51 may be removed for use. With the connection portions 52, 53 removed, the surgical guide 51 has the same construction as the surgical guide 41 shown in Fig. 9, so that the connection portions 52, 53 do not prevent the passage of the neck of the implant handpiece.

The guide hole formation member 43a of the surgical guide 51 shown in Fig. 10 is also preferably composed of a resin having lower frictional resistance, such as TEFLON (registered trade mark).

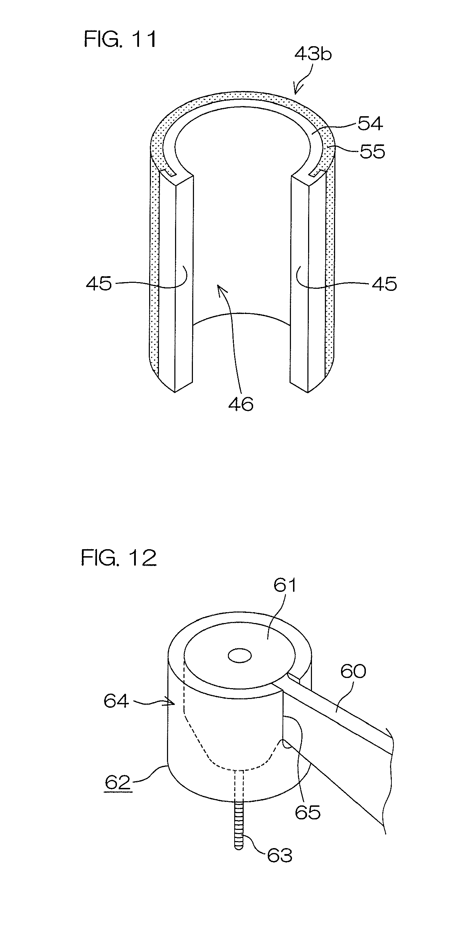

Fig. 11 is a perspective view showing a modification of the guide hole formation member. The guide hole formation member 43b shown in Fig. 11 has a double layer structure including an inner peripheral member 54 such as composed of TEFLON (registered trade mark), and an outer peripheral member 55 composed of a metal such as aluminum. With this arrangement, the roundness (the roundness as seen in plan) of an inner peripheral surface 46 of the guide hole formation member 43b can be reliably maintained, so that the head of the handpiece can be properly guided by the inner peripheral surface 46. Since the guide hole formation member 43b is removably attached to the guide body 42 (see Fig. 9 or 10), the guide hole formation member 43b can be reused after disinfection and sterilization thereof.

The guide hole formation members 43, 43a, 43b shown in Figs. 9 to 11 may be each configured such that a multiplicity of small balls are rotatably embedded in the inner peripheral surface. For example, a plurality of grooves are equidistantly provided in the inner peripheral surface as extending axially, and the small balls are rotatably fitted in the grooves. With this arrangement, when the head of the handpiece is inserted within the inner peripheral surface, the inner peripheral surface does not directly contact the outer peripheral surface of the head, but the multiplicity of small balls embedded in the inner peripheral surface rotatably contact the outer peripheral surface of the head. Therefore, when the head is slid within the inner peripheral surface, the head can be smoothly slid with lower frictional resistance.

Fig. 12 is a perspective view of the head of the implant handpiece fitted with a handpiece adaptor according to still another embodiment of the present invention.

Referring to Fig. 12, a head 61 is provided at a distal end of a neck 60 of a dental handpiece. Where an outer peripheral surface of the head 61 is not cylindrical unlike that of the head according to the present invention, the adaptor 62 according to this embodiment is attached to the head 61. The adaptor 62 is fitted around the head 61 as covering the peripheral surface of the head 61. The adaptor 62 has a round outer peripheral surface 64 which is arcuate or round and concentric with a drill bur 63 attached to the head 61 when being attached to the head. With the adaptor 62 fitted around the head 61, the head 61 of the implant handpiece is imparted with an outer peripheral shape conformal to the round peripheral surface 64, so that the inventive surgical guide can be utilized.

The adaptor 62 has an engagement slit 65 to be engaged with the distal end of the neck 60 and, therefore, is fitted around the head 61 with a predetermined contact pressure.

The adaptor 62 is composed of a metal and/or a resin. Where the adaptor 62 is composed of a resin, the resin is preferably TEFLON (registered trade mark). In this case, the frictional resistance of the round peripheral surface 64 is advantageously reduced.

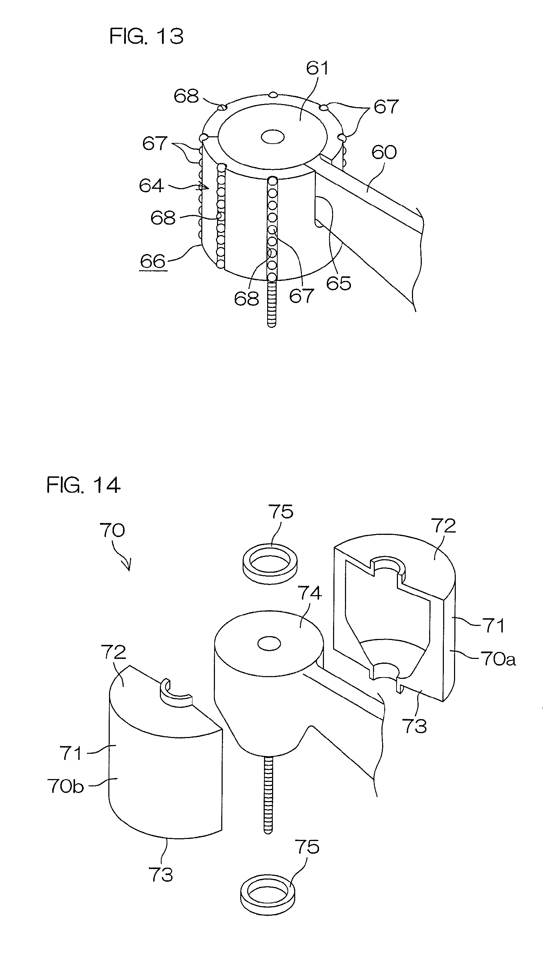

Fig. 13 is a perspective view for explaining an adaptor 66 according to further another embodiment. Like the adaptor 62 shown in Fig. 12, the adaptor 66 is fitted around the head 61 of the implant handpiece, and includes an engagement slit 65 to be engaged with the distal end of the neck 60. The adaptor 66 also has a round outer peripheral surface 64. Further, a multiplicity of small balls 67 are rotatably embedded in the round peripheral surface 64 as slightly projecting from the round peripheral surface 64. A plurality of grooves 68 are equidistantly provided in the round peripheral surface 64 as extending axially, and the small balls 67 are fitted in these grooves 68.

With this arrangement, when the head 61 fitted with the adaptor 66 is guided by the surgical guide, the round peripheral surface 64 of the adaptor 66 does not contact the guide hole of the surgical guide, but the small balls are rotated in contact with the inner peripheral surface of the guide hole. Therefore, the head 61 fitted with the adaptor 66 is properly guided by the surgical guide with lower frictional resistance.

Fig. 14 is a perspective view for explaining an adaptor 70 according to still another embodiment of the present invention. The adaptor 70 is dividable into a first cover 70a and a second cover 70b which are symmetrical with respect to a center plane thereof. The first cover 70a includes an arcuate peripheral portion 71 and end face portions 72, 73 provided on upper and lower sides of the peripheral portion 71. Similarly, the second cover 70b includes a peripheral portion 71 and two end face portions 72, 73. The first cover 70a and the second cover 70b are combined with each other with their openings opposed to each other. The first and second covers 70a, 70b thus combined intimately contact an exterior of a head 74 of an implant handpiece to cover an outer peripheral surface and parts of upper and lower faces of the head 74. With the peripheral portions 71 being engaged with each other in abutment with each other, lock members 75 are engaged with the first cover 70a and the second cover 70b to prevent the first cover 70a and the second cover 70b from being disengaged from each other, whereby the adaptor 70 is completely attached to the head 74.

With the adaptor 70 fitted around the head 74, outer peripheral surfaces of the peripheral portions 71 define a completely cylindrical portion. With the use of the adaptor 70, the head 74 is imparted with a cylindrical outer peripheral shape which permits the guiding by means of the implant implantation surgical guide.

Where the adaptor 70 is composed of TEFLON (registered trade mark), for example, the frictional resistance of the outer peripheral surface of the adaptor 70 is reduced, so that the adaptor can be properly slid in the guide hole of the surgical guide.

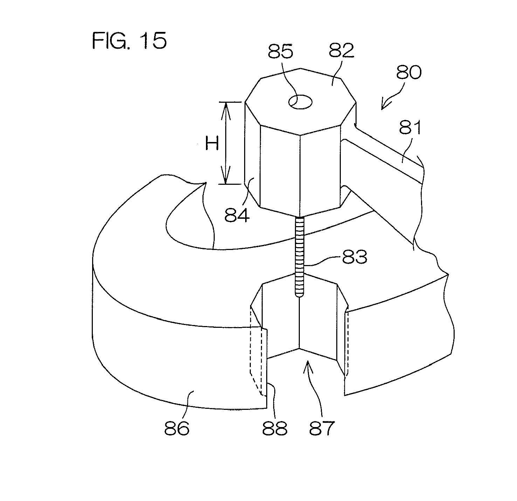

Fig. 15 is a perspective view for explaining an embodiment according to an inventive aspect of claim 13.

An implant handpiece 80 according to this embodiment has a head 82 having a regular octagonal shape as seen in plan at a distal end of a neck 81 thereof. A drill bur 83 can be attached to a center of the head 82. The head 82 has a regular octagonal outer peripheral surface 84 concentric with the center axis of the attached drill bur 83 and having a predetermined length H as measured axially of the drill bur 83. The head 82 has a hole 85 provided at the center of an upper face thereof and serving as a water supply hole for supplying cooling water during the drilling operation.

A surgical guide 86 to be used in drilling an implant implantation hole by means of the implant handpiece 80 has a guide hole 87. The guide hole 87 is a prismatic hole extending vertically through the surgical guide 86 and having a regular octagonal shape as seen in plan. The head 82 of the implant handpiece 80 is inserted into the guide hole 87 from above, and guided to be slid axially of the drill bur 83. The hole 87 has an opening 88, which permits vertical movement of a distal end of the neck 81 of the implant handpiece 80.

Since the implant handpiece 80 and the surgical guide 86 are configured as shown in Fig. 15, play present between the implant handpiece 80 and the surgical guide 86 is minimized when the head 82 is inserted into the guide hole 87 from above to be vertically slid along the guide hole 87. Therefore, the head 82 can be uniquely and smoothly moved axially of the guide hole 87 without the rattling and the wobbling of the head 82 slid in the guide hole 87. Thus, the implantation hole can be drilled at a proper position determined for the implantation of an implant through diagnosis.

In the aforementioned embodiment, the head 82 has a regular octagonal plan shape, and the guide hole 87 has a corresponding regular octagonal plan shape by way of example. However, the plan shape of the head 82 is not limited to the regular octagonal shape, but may be a regular triangular shape, a square shape, a regular pentagonal shape, a regular hexagonal shape or other regular polygonal shape. Where the head 82 has a predetermined regular polygonal plan shape, the guide hole 87 of the surgical guide 86 has a corresponding regular polygonal plan shape.

In the present invention, the head 82 per se has the regular octagonal outer peripheral surface 84 by way of example. The regular polygonal peripheral surface 84 is not necessarily required to be defined by the head 82 per se, but may be defined by an adaptor to be fitted around the head 82 as described with reference to Figs. 12 to 14.

Similarly, the guide hole 87 formed in the surgical guide 86 may be defined directly in the surgical guide 86. Alternatively, the surgical guide 86 having the guide hole 87 as shown in Fig. 15 may be provided by forming an attachment hole in the surgical guide 86 and fitting a guide hole formation member having a regular octagonal inner peripheral surface in the attachment hole as described with reference to Figs. 9 to 11.

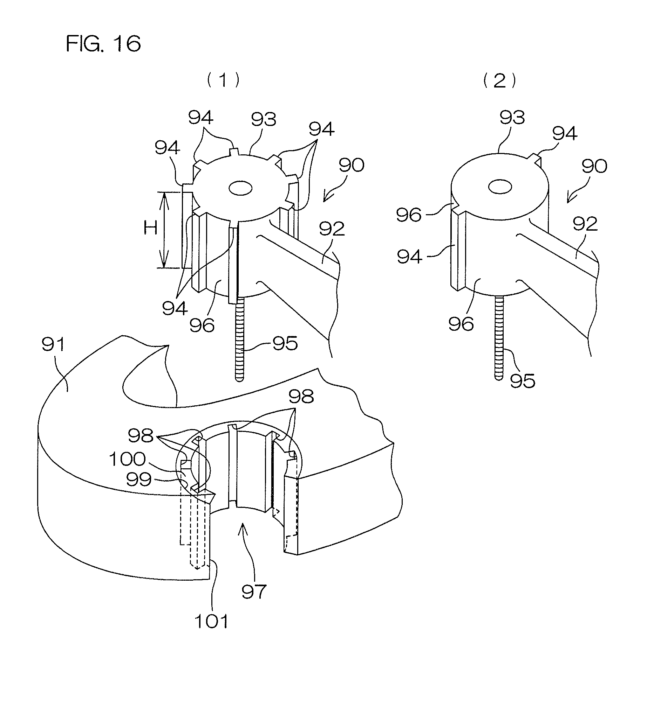

Figs. 16(1) and 16(2) are perspective views showing an embodiment according to an inventive aspect of claim 14.

Fig. 16(1) illustrates, in perspective, major portions of an implant handpiece 90 and a surgical guide 91 to be used in combination with the implant handpiece 90 according to the embodiment of the inventive aspect of claim 14.

The implant handpiece 90 has a head 93 provided at a distal end of a neck 92. The head 93 has a round outer shape as seen in plan, and includes eight engagement projections 94 radially projecting from the round outer shape. The head 93 basically has a cylindrical shape, and a drill bur 95 is attached to the center of a lower surface of the head 93 as projecting downward. A cylindrical peripheral surface 96 of the head 93 has a predetermined length H as measured axially of the drill bur 95, and serves as a guide surface to be guided by the guide hole to be described later.

The engagement projections 94 project from the peripheral surface 96 radially about the center axis of the drill bur 95 (i.e., the center axis of the head 93), and are elongated longitudinally of the peripheral surface 96. The engagement projections 94 are equiangularly arranged as seen in plan.

On the other hand, a guide hole 97 formed in the surgical guide 91 has a round shape as seen in plan and has, for example, eight engagement grooves 98 provided in an inner peripheral surface thereof as extending axially thereof. The engagement grooves 98 are equiangularly arranged as seen in plan. More specifically, the head 93 of the implant handpiece 90 is inserted into the guide hole 97 from above, and guided to be slid vertically through the guide hole 97. The engagement grooves 98 of the guide hole 97 are brought into engagement with the engagement projections 94 of the head 93.

With this arrangement, even if the guide hole 97 has an opening 101, play of the head 93 in the guide hole 97 is minimized during the sliding of the head 93 in the guide hole 97 as in the case of the implant handpiece 80 and the surgical guide 86 described with reference to Fig. 15. Therefore, this arrangement is free from the wobbling, the offset and the rattling of the head 93 in the guide hole 97.

Fig. 16(2) is a modification of the head 93, in which two engagement projections 94 are provided, for example, at positions spaced by an angle of 180 degrees about the center axis of the head 93. Even if the head 93 has a shape as shown in Fig. 16(2), the head 93 can be guided through the guide hole 97 of the surgical guide 91 shown in Fig. 16(1). Thus, the head 93 can be vertically slid in the guide hole 97 with little play.

The implant handpieces 90 shown in Figs. 16 (1) and 16(2) each have an outer shape such that the head 93 per se includes the peripheral surface 96 and the engagement projections 94. Alternatively, an adaptor may be fitted around the head as described with reference to Figs. 12 to 14 to define the outer shape including the peripheral surface 96 and the engagement projections 94.

Further, the guide hole 97 may be directly formed in the surgical guide 91 per se, or may be defined by fitting a guide hole formation member 100 in an attachment hole 99 formed in the surgical guide 91.

In the embodiment of Figs. 16(1) and 16(2), the implant handpiece includes the eight or two engagement projections 94, and the guide hole 97 has eight engagement grooves 98 by way of example. However, the numbers of the engagement projections 94 and the engagement grooves 98 are not limited to the aforementioned exemplary numbers, as long as the engagement projections 94 and the engagement grooves 98 are present in plurality.

The present invention is not limited to the embodiments described above, but various modifications may be made within the purview of the appended claims.

## Claims

1. An implant implantation drilling tool comprising:

    an implant handpiece including a head to which a drill bur is attached, the head having a round outer peripheral surface which is concentric with a center axis of the attached drill bur and has a predetermined length as measured axially of the drill bur; and
    a surgical guide to be fitted in a patient's oral cavity, the surgical guide having a guide hole for guiding the head of the implant handpiece slidably axially of the drill bur, the guide hole having an arcuate inner peripheral surface to be opposed to the round peripheral surface of the head for guiding the head along the inner peripheral surface axially of the drill bur.

2. An implant implantation drilling tool as set forth in claim 1,
wherein the implant handpiece has a neck having a distal end provided with the head,
wherein the distal end of the neck is connected to the outer peripheral surface of the head, and has a width that is smaller than a diameter of the outer peripheral surface of the head.

3. An implant implantation drilling tool as set forth in claim 2,
wherein the guide hole of the surgical guide has an opening through which the distal end of the neck is insertable,
wherein the opening has an opening angle less than 180 degrees about a center of the guide hole.

4. An implant implantation drilling tool as set forth in any of claims 1 to 3,
wherein one of the outer peripheral surface of the head and the inner peripheral surface of the guide hole has a water flow channel through which cooling water flows back.

5. An implant handpiece comprising:

    a head to which a drill bur is attached;

    wherein the head has a round outer peripheral surface concentric with a center axis of the attached drill bur and having a length not less than a predetermined length as measured axially of the drill bur.

6. An implant implantation surgical guide to be used for implantation of an implant, the surgical guide having a guide hole for guiding a head of an implant handpiece to which a drill bur is attached,
wherein the guide hole has an arcuate inner peripheral surface for sliding the head of the implant handpiece axially of the drill bur, and is configured such that an outer peripheral surface of the head is slid along the inner peripheral surface.

7. An implant implantation surgical guide to be used for implantation of an implant, the surgical guide comprising:

    a guide body to be fitted in a patient's oral cavity and having an attachment hole formed therein; and
    a guide hole formation member including a hollow cylindrical body fitted in the attachment hole with its outer surface connected to an inner surface of the attachment hole for sliding an outer surface of a head of a handpiece along an inner surface of the guide hole formation member, the hollow cylindrical body having a cutaway portion or a removable portion extending axially thereof in an angular range less than 180 degrees for passage of a neck of the handpiece.

8. A guide hole formation member to be fitted in an attachment hole of a guide body of a surgical guide as recited in claim 7, the guide hole formation member comprising:

    a hollow cylindrical body which has an arcuate inner peripheral surface having an angular range not less than 180 degrees and standardized as conforming to an outer surface of a head of a handpiece;
    the hollow cylindrical body having a cutaway portion extending axially thereof in an angular range less than 180 degrees to permit passage of a neck of the handpiece when the head of the handpiece is slid along the inner peripheral surface; and
    a removable band portion which bridges the cutaway portion and permits the passage of the neck of the handpiece after being removed.

9. A guide hole formation member as set forth in claim 8, which is composed of a resin, a metal or a combination of the resin and the metal.

**10.** A guide hole formation member as set forth in claim 8 or 9 further comprising:

a multiplicity of small balls rotatably embedded in the inner peripheral surface as slightly projecting from the inner peripheral surface, and arranged to be rotated in contact with the outer surface of the head when the head of the handpiece is slid along the inner peripheral surface.

**11.** An implant handpiece adaptor to be attached to a head of an implant handpiece, the adaptor having an arcuate outer peripheral surface which is concentric with a drill bur attached to the head when being fitted around the head.

**12.** An implant handpiece adaptor as set forth in claim 11, comprising:

a multiplicity of small balls rotatably embedded in the peripheral surface of the adaptor as slightly projecting from the peripheral surface.

**13.** An implant implantation drilling tool comprising:

an implant handpiece including a head to which a drill bur is attached, the head having a regular polygonal outer peripheral surface which is concentric with a center axis of the attached drill bur and has a predetermined length as measured axially of the drill bur; and
a surgical guide to be fitted in a patient's oral cavity, the surgical guide having a guide hole for guiding the head of the implant handpiece slidably axially of the drill bur, the guide hole having a regular polygonal inner peripheral surface to be opposed to the regular polygonal peripheral surface of the head for guiding the head along the inner peripheral surface axially of the drill bur.

**14.** An implant implantation drilling tool comprising:

an implant handpiece including a head to which a drill bur is attached, the head having a round outer peripheral surface which is concentric with a center axis of the attached drill bur and has a predetermined length as measured axially of the drill bur, the head including an engagement projection projecting outward from the round peripheral surface about the center axis; and
a surgical guide to be fitted in a patient's oral cavity, the surgical guide having a guide hole for guiding the head of the implant handpiece slidably axially of the drill bur, the guide hole having an arcuate inner peripheral surface to be opposed to the round peripheral surface of the head for guiding the head along the inner peripheral surface axially of the drill bur, the surgical guide including a plurality of engagement grooves formed in the inner peripheral surface as extending axially of the drill bur for engagement with the engagement projection.

FIG. 1

FIG. 2

FIG. 3

## FIG. 4

(A)

(B)

(C)

FIG. 5

FIG. 6

FIG. 7

FIG. 8

FIG. 9

FIG. 10

FIG. 11

FIG. 12

FIG. 13

FIG. 14

FIG. 15

FIG. 16

( 1 )

( 2 )

## INTERNATIONAL SEARCH REPORT

| International application No. |
| --- |
| PCT/JP2008/063779 |

**A. CLASSIFICATION OF SUBJECT MATTER**
*A61C1/08*(2006.01)i, *A61C8/00*(2006.01)i

According to International Patent Classification (IPC) or to both national classification and IPC

**B. FIELDS SEARCHED**

Minimum documentation searched (classification system followed by classification symbols)
A61C1/08, A61C8/00

Documentation searched other than minimum documentation to the extent that such documents are included in the fields searched
Jitsuyo Shinan Koho            1922-1996    Jitsuyo Shinan Toroku Koho    1996-2008
Kokai Jitsuyo Shinan Koho    1971-2008    Toroku Jitsuyo Shinan Koho    1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 9-294750 A  (Morihiro HATTORI),<br>18 November, 1997 (18.11.97),<br>Par. Nos. [0010] to [0016]; Figs. 2 to 4<br>(Family: none) | 1,2,5,6 |
| A | JP 2005-518868 A  (CARMICHAEL, Robert, P.),<br>30 June, 2005 (30.06.05),<br>Full text; all drawings<br>& US 2003/0165791 A1    & EP 1480576 A1<br>& WO 2003/073957 A1 | 1,2,5,6 |
| A | JP 2001-212158 A  (Keiji KOYANAGI),<br>07 August, 2001 (07.08.01),<br>Full text; all drawings<br>(Family: none) | 1,2,5,6 |

☒ Further documents are listed in the continuation of Box C.      ☐ See patent family annex.

| | |
| --- | --- |
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>16 October, 2008 (16.10.08) | Date of mailing of the international search report<br>28 October, 2008 (28.10.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

| | **INTERNATIONAL SEARCH REPORT** | International application No. |
|---|---|---|
| | | PCT/JP2008/063779 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 63-216560 A  (Nikon Corp.),<br>08 September, 1988 (08.09.88),<br>Full text; all drawings<br>(Family: none) | 1,2,5,6 |

Form PCT/ISA/210 (continuation of second sheet) (April 2007)

**INTERNATIONAL SEARCH REPORT**

| International application No. |
|---|
| PCT/JP2008/063779 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:
    See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1, 2, 5 and 6.

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

| **INTERNATIONAL SEARCH REPORT** | International application No. |
|---|---|
| | PCT/JP2008/063779 |

Continuation of Box No.III of continuation of first sheet(2)

(1) In document JP 9-294750 A (Morihiro HATTORI), 18 November, 1997 (18.11.97), Par. Nos. [0010] - [0016], and Fig. 2 - Fig. 4, there is described an implant erecting drill tool comprising an implanting hand-piece (or a pouring tool 29), in which a head has a contour concentric to the center axis of a drill bar and has a circumferential portion (or the circumference of a guide member 34) of a predetermined length in the axial direction of the drill bar, and a surgical guide (or a surgical stent 35) having a circular inner circumferential portion (or the inner circumference of a guide ring 43) confronting the circular inner circumference portion of the head.

Moreover, it cannot be said especially difficult to form the circular inner circumference in an arcuate shape, and the effect to come from the arcuate shape is within the range which can be predicted by those skilled in the art, but cannot be said to be outstanding.

(2) The matter common to the claim 1 and claims 2 - 14 cannot be considered as a special technical feature within the meaning of PCT Rule 13.2, second sentence, since it neither appears to involve an inventive step in view of document JP 9-294750 A nor makes any contribution over the prior art.

Excepting the matter common to claim 3 and claims 7 - 10 and the matter common to claim 11 and claim 12, there exists no common matter which can be considered as a special technical feature.

Hence, the inventions of the following nine groups do not comply with the requirement of unity of invention, since no technical relation among those inventions prescribed in PCT Rule 13.2 can be seen.

1. Claim 1
2. Claim 2
3. Claims 3 and 7 - 10
4. Claim 4
5. Claim 5

6. Claim 6
7. Claims 11 and 12
8. Claim 13
9. Claim 14

In connection with the invention of claims 2, 5 and 6, the number of inventions of the international application described in claims is six, as described in the following, since no effort is needed to conduct additional search at all for examining the main invention of claim 1.

1. Claims 1, 2, 5 and 6
2. Claims 3 and 7 - 10
3. Claim 4

4. Claims 11 and 12
5. Claim 13
6. Claim 14

Form PCT/ISA/210 (extra sheet) (April 2007)

**EP 2 189 130 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001212158 A
- JP 2005518834 A
- JP 2004500164 A